# EUROPÄISCHE PATENTANMELDUNG

(11) **EP 4 186 677 A1**
(43) Veröffentlichungstag der Anmeldung: **31.05.2023**
(21) Anmeldenummer: 21211093.6
(22) Anmeldetag: 29.11.2021
(51) Int. Cl.: B29C 48/00, B29C 48/06, B29C 48/12, B29C 48/16

(54) **VERFAHREN ZUR HERSTELLUNG VON DÄMMELEMENTEN**

(71) Anmelder: Sika Technology AG, 6340 Baar (CH)
(72) Erfinder: ROSINHA, Nuno, 8967 Widen (CH); MEISTER, Marcel, 8182 Hochfelden (CH)
(74) Vertreter: Sika Patent Attorneys

(57) **Zusammenfassung**

Ein Verfahren zur Herstellung eines Dämmelementes für die Dämmung eines Strukturelementes in einem Kraftfahrzeug umfasst die Schritte: Extrudieren eines Trägers und eines expandierbaren Materials; Ablängen des Extrudates; und Abtragen von Bestandteilen des Trägers und/oder des expandierbaren Materials von den abgelängten Extrudaten zur Bildung einzelner Dämmelemente.

## Beschreibung

Die Erfindung betrifft ein Verfahren zur Herstellung von Dämmelement für die Dämmung eines Strukturelementes in einem Kraftfahrzeug.

Vielfach weisen Bauelemente, wie beispielsweise Karosserien und/oder Rahmen von Transport- und Fortbewegungsmitteln, insbesondere von Fahrzeugen zu Wasser oder zu Land oder von Luftfahrzeugen, Strukturen mit Hohlräumen auf, um leichtgewichtige Konstruktionen zu ermöglichen. Diese Hohlräume verursachen jedoch verschiedenste Probleme. Je nach Art des Hohlraumes muss dieser zum Verhindern des Eindringens von Feuchtigkeit und Verschmutzungen, die zur Korrosion der Bauelemente führen können, abgedichtet werden. Oft ist es auch wünschenswert, die Hohlräume und somit das Bauelement wesentlich zu verstärken, jedoch das geringe Gewicht beizubehalten. Oft ist es auch notwendig, die Hohlräume und somit die Bauelemente zu stabilisieren, um Geräusche, die sonst den Hohlraum entlang oder durch diesen hindurch übertragen werden würden, zu reduzieren. Viele dieser Hohlräume weisen eine unregelmässige Form oder ein enges Ausmass auf, wodurch es erschwert wird, sie richtig abzudichten, zu verstärken und zu dämpfen.

Insbesondere im Automobilbau, aber auch im Flugzeug- und Bootsbau, werden deshalb Abdichtungselemente (Englisch: baffle) verwendet, um Hohlräume abzudichten und/ oder akustisch abzuschotten, oder Verstärkungselemente (Englisch: reinforcer) verwendet, um Hohlräume zu verstärken.

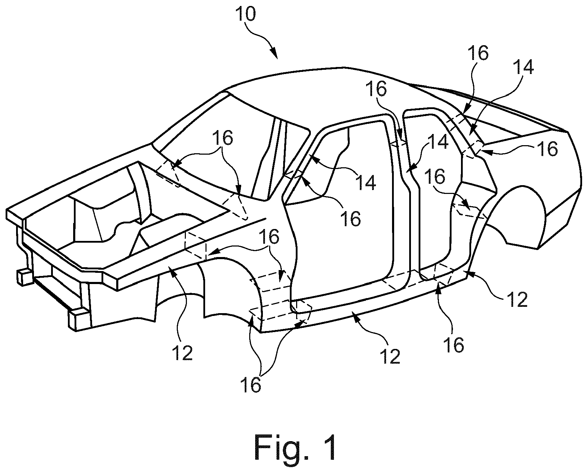

In Fig. 1 ist eine Karosserie eines Automobils schematisch dargestellt. Die Karosserie 10 weist dabei verschiedene Strukturen mit Hohlräumen, wie beispielsweise Säulen 14 und Träger bzw. Verstrebungen 12 auf. Solche Strukturelemente 12, 14 mit Hohlräumen werden üblicherweise mit Abdichtungs- und/oder Verstärkungselementen 16 abgedichtet bzw. verstärkt.

Nachteilig an den bisher bekannten Abdichtungs- und/oder Verstärkungselementen ist es, dass für jede Karosserieform und für jeden Hohlraum einer Karosserie ein individuell angepasstes Element hergestellt werden muss. Dies führt zu hohen Entwicklungs- und Herstellungskosten und ist insbesondere bei kleineren Fahrzeugserien nachteilhaft.

Es ist daher eine Aufgabe der vorliegenden Erfindung, ein verbessertes Dämmelement zur Dämmung eines Strukturelementes in einem Kraftfahrzeug zur Verfügung zu stellen, welches die Nachteile des Standes der Technik vermeidet. Das Dämmelement soll insbesondere wirtschaftliche Vorteile bei Kleinserien mit sich bringen und insgesamt einen Entwicklungs- und Herstellungsaufwand der Dämmelemente reduzieren.

Diese Aufgabe wird gelöst durch ein Verfahren zur Herstellung eines Dämmelementes für die Dämmung eines Strukturelementes in einem Kraftfahrzeug, das Verfahren umfassend die Schritte: Extrudieren eines Trägers und eines expandierbaren Materials in einer Extrusionsrichtung, wobei ein Querschnitt des Extrudates senkrecht zur Extrusionsrichtung eine im Wesentlichen rechteckige Grundform hat, wobei eine grösste Breite des Extrudates höchstens 20% grösser ist als eine kleinste Breite des Extrudates, und wobei eine grösste Höhe des Extrudates höchstens 20% grösser ist als eine kleinste Höhe des Extrudates; Ablängen des Extrudates; und Abtragen von Bestandteilen des Trägers und/oder des expandierbaren Materials von den abgelängten Extrudaten zur Bildung einzelner Dämmelemente.

Diese Lösung hat den Vorteil, dass durch ein solches Herstellungsverfahren verschiedenartige Dämmelemente hergestellt werden können, ohne dass dabei hohe Kosten für Herstellungswerkzeuge aufgewendet werden müssen.

Ein Kerngedanke der vorliegenden Erfindung besteht insbesondere darin, dass durch das Abtragen von Bestandteilen des Trägers und/oder des expandierbaren Materials von den abgelängten Extrudaten verschiedenartig geformte Dämmelemente herstellbar sind, ohne dass dabei die Extrusionsvorrichtung beziehungsweise die Herstellungswerkzeuge verändert werden müssen. Durch das nachträgliche Formen der abgelängten Extrudate lassen sich daher für verschiedene Anwendungszwecke angepasste Dämmelemente formen, welche ursprünglich aus demselben Extrudat mit demselben Querschnitt hervorgehen. Dies bietet insbesondere Kostenvorteile für kleinere Serien oder auch für Prototypen, bei welchen es sich oftmals nicht lohnt, in eigenständige Werkzeuge zu investieren.

Weiterhin können durch das hier vorgeschlagene Verfahren in vielen Fällen auch Entwicklungskosten eingespart werden, weil das Verfahren durch den nachträglichen Formungsschritt durch das Abtragen sehr variabel und anpassbar ist. Dadurch können zunächst erste Dämmelemente hergestellt werden und getestet werden, und in einem sukzessiven Verfahren können die Dämmelemente verbessert beziehungsweise angepasst werden.

Durch das Vorsehen eines im Wesentlichen rechteckigen Querschnittes des Extrudates kann eine nachgelagerte Formung der abgelängten Extrudate auf viele verschiedene Arten geschehen. Dadurch, dass der Querschnitt sowohl über seine Breite als auch über seine Höhe konstant aufgebaut ist, wird durch eine nachgelagerte Abtragung die Grundeigenschaft des Dämmelementes beibehalten. Somit kann das Dämmelement in seiner Grösse angepasst werden, ohne dabei die vorgesehenen Eigenschaften bezüglich der Dämmung zu verlieren.

Die Bezeichnung "Dämmelement" bzw. "Dämmung" bzw. "gedämmt" umfasst im Zusammenhang mit dieser Erfindung Elemente bzw. Strukturen bzw. Verfahrensschritte zur Abschottung und/oder Verschliessung und/oder Verstärkung und/oder Dämmung eines Strukturelementes. Diese verschiedenen Eigenschaften eines solchen Dämmelementes können dabei einzeln oder aber in Kombination miteinander auftreten.

In einer beispielhaften Ausführungsform wird das Extrudat beim Ablängen im Wesentlichen senkrecht zur Extrusionsrichtung geschnitten.

In einer alternativen Ausführungsform wird das Extrudat beim Ablängen schräg zur Extrusionsrichtung oder bogenförmig oder wellenförmig oder in einer gezackten Linie geschnitten.

In einer beispielhaften Ausführungsform wird der Träger mit einer ersten Wand und einer zweiten Wand extrudiert, welche im Wesentlichen parallel zueinander verlaufen und durch zumindest eine Rippe miteinander verbunden sind.

In einer ersten Weiterbildung wird dabei das expandierbare Material zwischen den beiden Wänden extrudiert.

In einer zweiten beispielhaften Weiterbildung wird dabei das expandierbare Material auf Aussenseiten der Wände extrudiert, wobei ein Bereich zwischen den Wänden frei bleibt von expandierbarem Material.

Je nachdem, welche Funktionen des Dämmelementes stärker gewichtet werden, kann das expandierbare Material auf unterschiedliche Art und Weise am Träger angeordnet werden. So eignet sich beispielsweise eine Anordnung des expandierbaren Materials zwischen zwei Wänden insbesondere zur Bildung von Dämmelementen, welche vor allem zur Abschottung und/oder Verschliessung eines Strukturelementes verwendet werden.

Eine Anordnung des expandierbaren Materials auf den Aussenseiten der beiden parallel verlaufenden Wände eignet sich insbesondere für Dämmelemente, welche vorwiegend zur Verstärkung eines Strukturelementes eingesetzt werden sollen.

In einer beispielhaften Ausführungsform wird der Träger zudem mit Schutzwänden, welche auf der Aussenseite der beiden Wände und neben dem expandierbaren Material angeordnet sind, extrudiert.

Das Vorsehen von solchen Schutzwänden bietet den Vorteil, dass dadurch ein mechanischer Schutz des expandierbaren Materials gewährleistet werden kann. Dies ist insbesondere für Transport und Manipulation der Dämmelemente vorteilhaft.

In einer beispielhaften Ausführungsform werden zwischen den beiden Wänden mehrere Rippen extrudiert, so dass dadurch ein mechanisch belastbarer Träger gebildet wird.

In einer beispielhaften Ausführungsform wird der Träger als Platte extrudiert, wobei das expandierbare Material ein- oder beidseitig der Platte extrudiert wird.

In einer beispielhaften Ausführungsform wird einstückig mit dem Träger zumindest ein Clip extrudiert, welcher über die rechteckige Grundform des Querschnittes des Extrudates hinausragt.

In einer beispielhaften Weiterbildung wird beim Abtragen eine Tiefe des Clips in Extrusionsrichtung so stark verkleinert, dass dadurch ein oder mehrere Clips mit einer Tiefe von weniger als 1 cm, insbesondere von weniger als 0,6 cm geformt werden.

Das einstückige Extrudieren und nachträgliche Formen von Clips zusammen mit dem Trägermaterial hat den Vorteil, dass keine nachgelagerten Schritte mehr notwendig sind zur Fertigstellung der Dämmelemente.

In einer alternativen Ausführungsform umfasst das Verfahren die zusätzlichen Schritte: Formen zumindest einer Öffnung im extrudierten Träger; und Einbringen eines vorgefertigten Clips in die Öffnung.

In einer beispielhaften Weiterbildung ist der vorgefertigte Clip aus einem anderen Material gebildet als der extrudierte Träger.

Das Verwenden von unterschiedlichen Materialien für Clip und Träger bietet den Vorteil, dass dadurch die Materialien für die jeweiligen Bestandteile optimiert werden können. So kann beispielsweise ein steiferes Material vorteilhaft sein zur Verwendung des Trägers, und ein weicheres flexibleres Material kann vorteilhaft sein zur Bildung der Clips.

In einer beispielhaften Ausführungsform wird beim Abtragen ein rechteckiger Grundriss der abgelängten Extrudate, welcher in einer Ebene der Extrusionsrichtung und der Breite des Extrudates liegt, in eine nicht rechteckige Form geändert.

In einer beispielhaften Ausführungsform wird beim Abtragen insbesondere eine Breite des Querschnittes des Extrudates verkleinert.

In einer beispielhaften Ausführungsform wird beim Abtragen insbesondere eine Kante des rechteckigen Grundrisses der abgelängten Extrudate in eine unregelmässig geformte Linie gebracht.

In einer beispielhaften Ausführungsform wird beim Extrudieren zumindest eine Folie derart integriert, dass die zumindest eine Folie die erste Wand und die zweite Wand des Trägers miteinander verbindet.

Das Vorsehen einer solchen Folie hat den Vorteil, dass dadurch eine Verformung des Dämmelementes während einer Expansion des expandierbaren Materiales verhindert werden kann, indem die Folie die beiden Wände zusammenhält.

In einer beispielhaften Weiterbildung ist die Folie eine Metallfolie oder eine Kunststofffolie.

In einer beispielhaften Weiterbildung hat die Folie eine Dicke von weniger als 0,8 mm, insbesondere weniger als 0,5 mm, insbesondere weniger als 0,3 mm.

In einer beispielhaften Weiterbildung ist die Folie sowohl in der ersten Wand als auch in der zweiten Wand verankert.

In einer beispielhaften Weiterbildung werden zumindest zwei oder zumindest drei Folien beim Extrudieren integriert.

In einer beispielhaften Ausführungsform werden beim Extrudieren Überstände geformt, welche am Träger angeordnet sind und welche in das expandierbare Material hineinragen.

Solche Überstände bieten den Vorteil, dass eine Delamination des expandierbaren Materials während und/oder nach einer Expansion verhindert werden kann, indem eine Anbindung des expandierenden bzw. des expandierten Materials an den Träger verbessert wird.

In einer beispielhaften Weiterbildung sind die Überstände aus demselben Material gebildet wie der Träger, und/oder die Überstände sind einstückig mit dem Träger ausgebildet.

In einer beispielhaften Weiterbildung ragen die Überstände zwischen 2 und 20 mm, insbesondere zwischen 3 und 15 mm, insbesondere zwischen 4 und 12 mm, von einer Trägerstruktur, insbesondere von Wänden oder Platten des Trägers, in das expandierbare Material hinein.

In einer beispilehaften Weiterbildung hat das Dämmelement zumindest zwei oder zumindest drei oder zumindest vier oder zumindest fünf oder zumindest sechs solche Überstände.

In einer beispielhaften Weiterbildung sind die Überstände im Wesentlichen senkrecht zu einer Platte und/oder zu einer Wand des Trägers angeordnet.

Als expandierbares Material können grundsätzlich verschiedene Materialien eingesetzt werden, welche zur Schäumung gebracht werden können. Das Material kann dabei Verstärkungseigenschaften aufweisen oder auch nicht. Typischerweise wird das expandierbare Material thermisch, durch Feuchtigkeit oder durch elektromagnetische Strahlung zur Expansion gebracht.

Ein solches expandierbares Material weist typischerweise ein chemisches oder ein physikalisches Treibmittel auf. Chemische Treibmittel sind organische oder anorganische Verbindungen, welche sich unter Einfluss von Temperatur, Feuchtigkeit, oder elektromagnetischer Strahlung zersetzen, wobei mindestens eines der Zersetzungsprodukte ein Gas ist. Als physikalische Treibmittel können beispielsweise Verbindungen eingesetzt werden, welche bei Erhöhung der Temperatur in den gasförmigen Aggregatszustand übergehen. Dadurch sind sowohl chemische als auch physikalische Treibmittel in der Lage, Schaumstrukturen in Polymeren zu erzeugen.

Bevorzugt wird das expandierbare Material thermisch geschäumt wobei chemische Treibmittel eingesetzt werden. Als chemische Treibmittel eignen sich beispielsweise Azodicarbonamide, Sulfohydrazide, Hydrogencarbonate oder Carbonate.

Geeignete Treibmittel sind beispielsweise auch kommerziell erhältlich unter dem Handelsnamen Expancel^{®} von der Firma Akzo Nobel, Niederlande, oder unter dem Handelsnamen Celogen^{®} von der Firma Chemtura Corp., USA.

Die für die Schäumung erforderliche Wärme kann durch externe oder durch interne Wärmequellen, wie einer exothermen chemischen Reaktion, eingebracht werden. Das schäumbare Material ist vorzugsweise bei einer Temperatur von ≤ 250°C, insbesondere von 100°C bis 250°C, bevorzugt von 120°C bis 240°C, bevorzugt von 130°C bis 230°C schäumbar.

Als expandierbare Materialien geeignet sind beispielsweise einkomponentige bei Raumtemperatur nicht fliessende Epoxidharzsysteme, welche insbesondere eine erhöhte Schlagzähigkeit aufweisen und Thixotropiermittel wie Aerosile oder Nanoclays enthalten. Beispielsweise weisen derartige Epoxidharzsysteme 20 bis 50 Gew.-% eines Epoxid-Füssigharzes, 0 bis 30 Gew.-% eines Epoxid-Festharzes, 5 bis 30 Gew.-% Zähigkeitsmodifikatoren, 1 bis 5 Gew.-% physikalische oder chemische Triebmittel, 10 bis 40 Gew.-% Füllstoffe, 1 bis 10 Gew.-% Thixotropiermittel und 2 bis 10 Gew.-% hitzeaktivierbare Härter auf. Als Zähigkeitsmodifikatoren eignen sich reaktive Flüssigkautschuke auf Basis von Nitrilkautschuk oder Derivate von Polyetherpolyol-Polyurethanen, Core-Shell Polymere und ähnliche dem Fachmann bekannte Systeme.

Ebenfalls geeignete expandierbare Materialien sind Treibmittel enthaltende einkomponentige Polyurethanzusammensetzungen, aufgebaut aus kristallinen, OH-Gruppen aufweisenden Polyestern im Gemisch mit weiteren Polyolen, vorzugsweise Polyetherpolyolen, und Polyisocyanaten mit blockierten Isocyanatgruppen. Der Schmelzpunkt des kristallinen Polyesters sollte ≥ 50 °C sein. Die Isocyanatgruppen des Polyisocyanats können beispielsweise mit Nucleophilen wie Caprolactam, Phenolen oder Benzoxalonen blockiert sein. Weiterhin eignen sich blockierte Polysocyanate wie sie beispielsweise in der Pulverlacktechnologie zum Einsatz kommen und beispielsweise unter den Handelsnamen Vestagon^{®} BF 1350 und Vestagon^{®} BF 1540 kommerziell erhältlich sind von Degussa GmbH, Deutschland. Als Isocyanate sind ebenfalls so genannte verkapselte oder oberflächendeaktivierte Polyisocyanate, welche dem Fachmann bekannt und beispielsweise beschrieben sind in EP 0 204 970.

Weiterhin eignen sich als expandierbare Materialien Treibmittel enthaltende zweikomponentige Epoxid/Polyurethan-Zusammensetzungen, wie sie beispielsweise beschrieben sind in WO 2005/080524 A1.

Weiterhin eignen sich als expandierbare Materialien Treibmittel enthaltende Ethylen-Vinyl-Acetat-Zusammensetzungen.

Ebenfalls geeignete expandierbare Materialien werden beispielsweise unter dem Handelsnamen SikaBaffle^{®} 240, SikaBaffle^{®} 250 oder SikaBaffle^{®} 255 von der Sika Corp., USA, vertrieben und sind in den Patenten US 5,266,133 und US 5,373,027 beschrieben. Solche expandierbaren Materialien sind für die vorliegende Erfindung besonders bevorzugt.

Als expandierbare Materialien mit Verstärkungseigenschaften sind beispiels-weise diejenigen bevorzugt, welche unter dem Handelsnamen SikaReinforcer^{®} 941 von der Sika Corp., USA, vertrieben werden. Diese sind beschrieben in US 6,387,470.

In einer beispielhaften Ausführungsform hat das expandierbare Material eine Expansionsrate von 800% bis 5000%, bevorzugt von 1000% bis 4000%, besonders bevorzugt von 1500% bis 3000%.

Expandierbare Materialien mit solchen Expansionsraten bieten den Vorteil, dass dadurch eine zuverlässige Abdichtung bzw. Dämmung des Strukturelementes gegen Flüssigkeiten und Schall erreicht werden kann.

In einer beispielhaften Ausführungsform ist das expandierbare Material als temperaturinduziertes Material ausgebildet.

Dies hat den Vorteil, dass dadurch der Ofen zur Einbrennung der Tauchlackierungsflüssigkeit benutzt werden kann, um das expandierbare Material zu expandieren und um dadurch den Hohlraum zu dämmen. Somit ist kein zusätzlicher Arbeitsschritt notwendig.

In einer beispielhaften Ausführungsform wird das expandierbare Material beim Extrudieren aus zwei unterschiedlichen Materialien hergestellt.

In einer beispielhaften Weiterbildung unterscheiden sich die beiden expandierbaren Materialien insbesondere hinsichtlich einer Expansionsrate, und/oder einem Temperaturbereich für die Expansion.

Der Träger kann aus beliebigen Materialien bestehen. Bevorzugte Materialien sind Kunststoffe, insbesondere Polyurethane, Polyamide, Polyester und Polyolefine, bevorzugt hochtemperaturbeständige Polymere wie Poly(phenylenether), Polysulfone oder Polyethersulfone; oder beliebige Kombinationen dieser Materialien. Besonders bevorzugt wird Polyamid, insbesondere Polyamid 6, Polyamid 6,6, Polyamid 11, Polyamid 12 oder ein Gemisch davon verwendet.

In einer beispielhaften Ausführungsform wird der Träger beim Extrudieren vollständig oder teilweise aus Plexiglas (Polymethylmethacrylat oder abgekürzt PMMA) hergestellt.

In einer beispielhaften Ausführungsform wird der Träger beim Extrudieren vollständig oder teilweise aus Polyamid 6, oder Polyamid 6,6, oder Polyamid 6.10, oder Polyamid 11, oder Polyamid 12, oder einem Gemisch davon, hergestellt.

In einer beispielhaften Ausführungsform wird der Träger beim Extrudieren vollständig oder teilweise aus Nylon 10 hergestellt.

Einzelheiten und Vorteile der Erfindung werden im Folgenden anhand von Ausführungsbeispielen und mit Bezug auf schematische Zeichnungen beschrieben. Es zeigen:
- Fig. 1: eine beispielhafte Darstellung einer Karosserie;
- Fig. 2a bis 2c: eine beispielhafte Darstellung eines Verfahrens zur Herstellung eines Dämmelementes; und
- Fig. 3a bis 6: schematische Darstellung von beispielhaften Querschnitten der Extrudate.

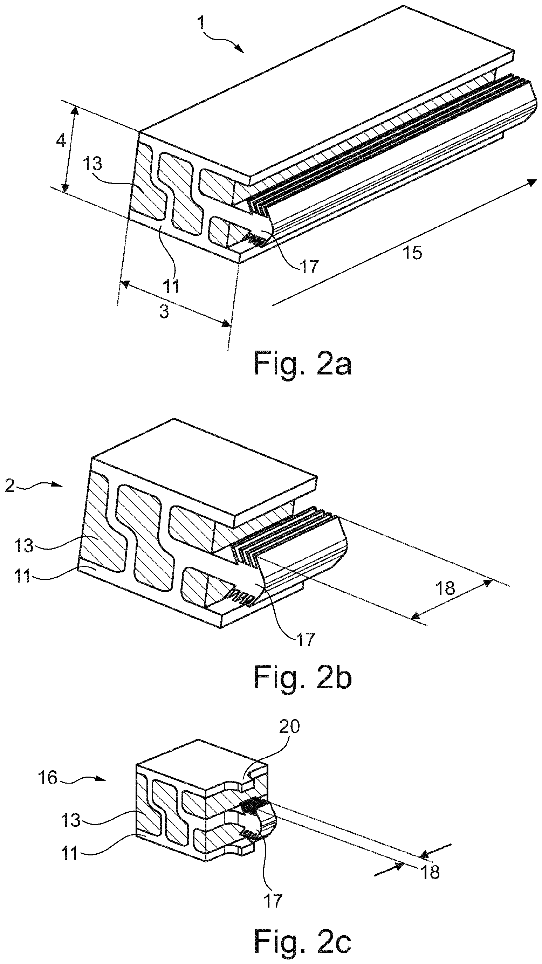

In den Fig. 2a bis 2c ist beispielhaft und schematisch ein Verfahren zur Herstellung eines Dämmelementes 16 dargestellt. Dabei zeigt die Fig. 2a das Extrudat 1, die Fig. 2b zeigt ein abgelängtes Extrudat 2 und die Fig. 2c zeigt schliesslich das fertig hergestellte Dämmelement 16.

In Fig. 2a ist die Extrusionsrichtung 15 eingezeichnet. Ein Querschnitt des Extrudates 1 senkrecht zur Extrusionsrichtung 15 hat eine rechteckige Grundform, mit einer Höhe 4 und einer Breite 3. Dabei ist eine grösste Breite 3 des Extrudates 1 höchstens 20% grösser als eine kleinste Breite 3 des Extrudates 1. Zudem ist eine grösste Höhe 4 des Extrudates 1 ebenfalls höchstens 20% grösser als eine kleinste Höhe 4 des Extrudates 1.

In diesem Ausführungsbeispiel umfasst der Träger 11 sowohl zwei parallel verlaufende Wände als auch zwischen den Wänden verlaufende Rippen.

In diesem Ausführungsbeispiel wird das Extrudat 1 beim Ablängen im Wesentlichen senkrecht zur Extrusionsrichtung 15 geschnitten. Die dadurch entstehenden abgelängten Extrudate 2 werden danach weiterbearbeitet, indem Bestandteile des abgelängten Extrudates 2 abgetragen werden. In diesem Ausführungsbeispiel werden lediglich Bestandteile des Trägers 11 abgetragen. Dabei wird der Träger 11 im Bereich der parallel verlaufenden Wände und im Bereich des extrudierten Clips 17 so weit abgetragen, dass ein Clip 17 mit einer Tiefe 18 von weniger als 1 cm entsteht, und dass von den Wänden Distanzelemente 20 gebildet werden, welche bei der Positionierung des Dämmelementes im Strukturelement hilfreich sind.

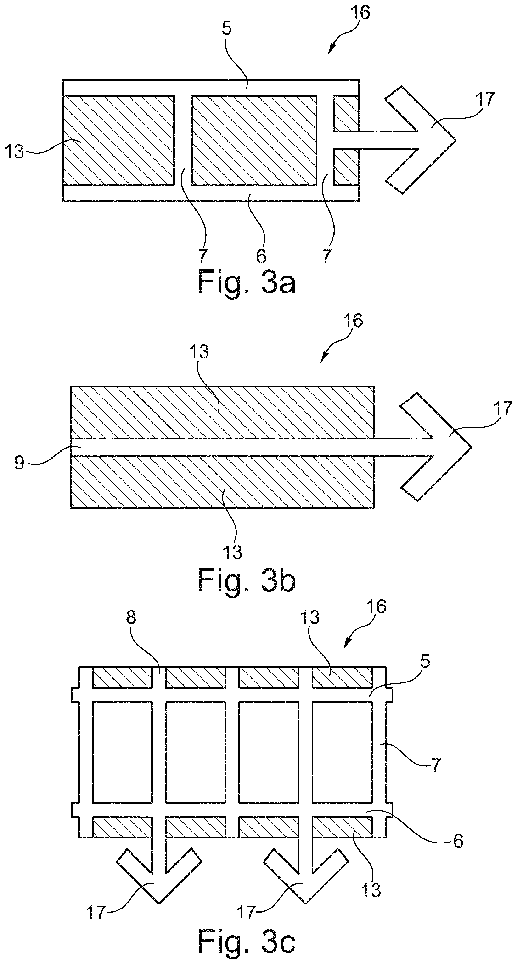

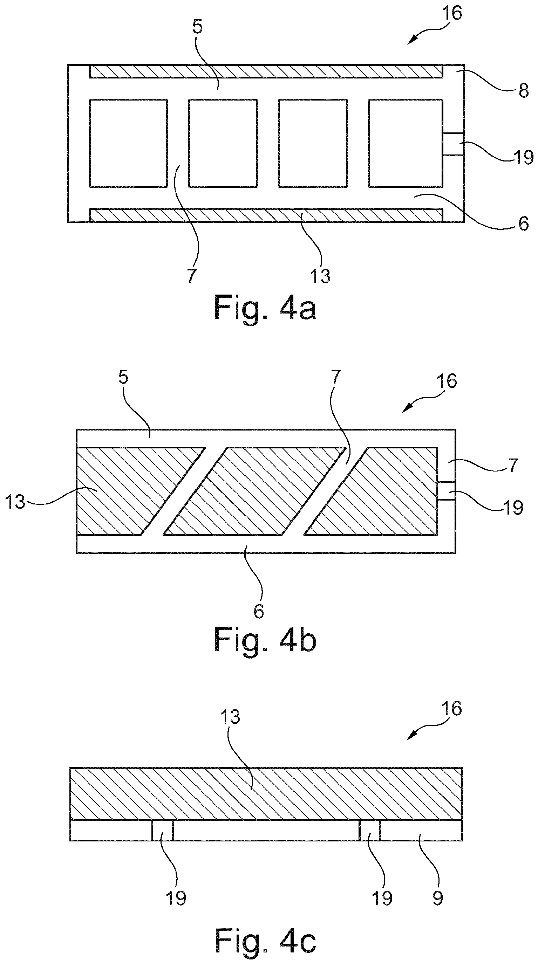

In den Fig. 3a bis 4c sind verschiedene Ausführungsbeispiele von Querschnitten eines Extrudates beziehungsweise eines Dämmelementes 16 dargestellt. Dabei zeigen die Fig. 3a bis 3c jeweils Dämmelemente 16, bei denen die Clips 17 integral mit dem Träger 11 gebildet sind, und die Fig. 4a bis 4c zeigen verschiedene Beispiele von Dämmelementen 16, bei denen der Clip als separates Teil ausgebildet wird, welches dann in einer Öffnung 19 des Trägers 11 angeordnet wird.

Das Dämmelement 16 gemäss Fig. 3a hat eine erste Wand 5 und eine zweite Wand 6 des Trägers 11, welche durch zwei Rippen 7 miteinander verbunden sind. Zwischen der ersten Wand 5 und der zweiten Wand 6 ist expandierbares Material 13 angeordnet.

In Fig. 3b ist ein weiteres beispielhaftes Dämmelement 16 dargestellt. In diesem Ausführungsbeispiel wird der Träger als Platte 9 extrudiert, wobei beidseitig der Platte 9 expandierbares Material 13 extrudiert wird.

In Fig. 3c ist ein weiteres Beispiel eines Dämmelementes dargestellt. Der Träger 11 umfasst wiederum eine erste Wand 5 und eine zweite Wand 6, wobei in diesem Beispiel mehrere Rippen 7 die beiden Wände 5, 6 miteinander verbinden. In diesem Ausführungsbeispiel ist das expandierbare Material 13 auf Aussenseiten der Wände 5, 6 angeordnet. Dabei sind jeweils Schutzwände 8 neben dem expandierbaren Material 13 angeordnet, um Beschädigungen des expandierbaren Materials bei Transport und Manipulation der Dämmelemente 16 zu verhindern. In diesem Ausführungsbeispiel ist der Zwischenraum zwischen der ersten Wand 5 und der zweiten Wand 6 frei von expandierbarem Material 13.

In Fig. 4a ist wiederum ein beispielhaftes Dämmelement dargestellt. Hier ist das expandierbare Material 13 ebenfalls auf Aussenseiten der ersten Wand 5 und der zweiten Wand 6 angeordnet und durch Schutzwände 8 vor mechanischen Einflüssen geschützt. Das beispielhafte Dämmelement 16 in Fig. 4b hat wiederum eine erste Wand 5 und eine zweite Wand 6. In diesem Ausführungsbeispiel sind die beiden Wände 5, 6 durch drei Rippen 7 miteinander verbunden, wobei zwei dieser Rippen schräg in Bezug auf eine Höhe des Querschnittes angeordnet sind.

In Fig. 4c ist schliesslich ein Dämmelement 16 gezeigt, welches wiederum eine Platte 9 umfasst. In diesem Ausführungsbeispiel ist lediglich auf einer Seite der Platte 9 expandierbares Material 13 angeordnet, wobei die andere Seite der Platte 9 frei ist von expandierbarem Material.

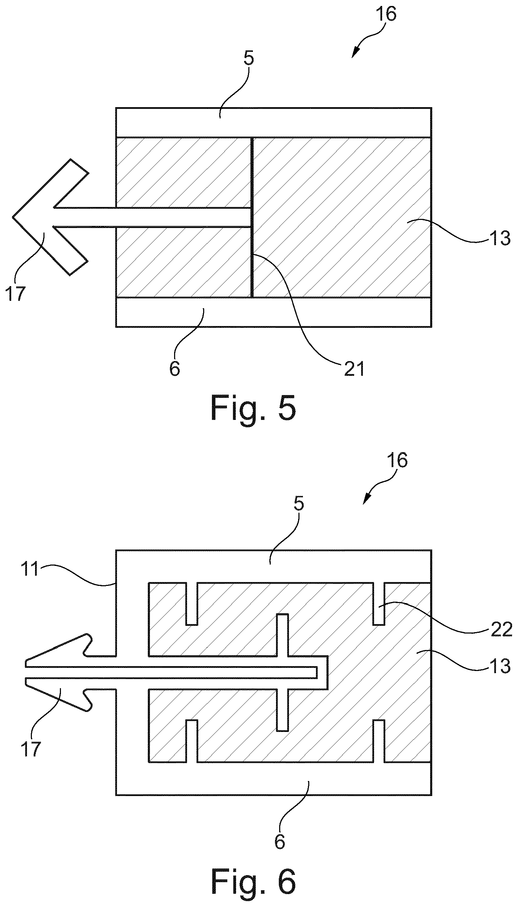

In Fig. 5 ist ein weiteres beispielhaftes Dämmelement 16 gezeigt, welches einen Träger 11 mit einer ersten Wand 5 und einer zweiten Wand 6 hat. Zwischen den Wänden 5, 6 ist wiederum expandierbares Material 13 angeordnet. In diesem Ausführungsbeispiel hat das Dämmelement 16 zusätzlich eine Folie 21, welche die beiden Wände 5, 6 miteinander verbindet. Die Folie 21 ist dabei vorzugsweise in den Wänden 5, 6 verankert. Bei einer Expansion des expandierbaren Materiales 13 kann die Folie 21 verhindern, dass die beiden Wände 5, 6 durch das expandierende Material zu stark auseinandergedrückt werden bzw. das Dämmelement 16 verformen.

In Fig. 6 ist ein weiteres beispielhaftes Dämmelement 16 gezeigt. In diesem Ausführungsbeispiel hat der Träger 11 ebenfalls eine obere Wand 5 und eine untere Wand 6, und zwischen den Wänden 5, 6 angeordnetes expandierbares Material 13. Zusätzlich hat das Dämmelement 16 mehrere Überstände 22, welche am Träger 11 angeordnet sind und in das expandierbare Material 13 hineinragen. Diese Überstände 22 führen dazu, dass eine Delamination des expandierbaren Materials 13 während und/oder nach einer Expansion verhindert werden kann, indem eine Anbindung des expandierenden bzw. des expandierten Materials 13 an den Träger 11 verbessert wird.

### Bezugszeichenliste

- 1: Extrudat
- 2: abgelängtes Extrudat
- 3: Breite
- 4: Höhe
- 5: erste Wand
- 6: zweite Wand
- 7: Rippe
- 8: Schutzwand
- 9: Platte
- 10: Karosserie
- 11: Träger
- 12: Strukturelement
- 13: expandierbares Element
- 14: Strukturelement
- 15: Extrusionsrichtung
- 16: Dämmelement
- 17: Clip
- 18: Tiefe
- 19: Öffnung
- 20: Distanzelement
- 21: Folie
- 22: Überstand

## Patentansprüche

1. Verfahren zur Herstellung eines Dämmelementes (16) für die Dämmung eines Strukturelementes (12, 14) in einem Kraftfahrzeug, das Verfahren umfassend die Schritte:
Extrudieren eines Trägers (11) und eines expandierbaren Materials (13) in einer Extrusionsrichtung (15), wobei ein Querschnitt des Extrudates (1) senkrecht zur Extrusionsrichtung (15) eine im Wesentlichen rechteckige Grundform hat, wobei eine grösste Breite (3) des Extrudates (1) höchstens 20% grösser ist als eine kleinste Breite (3) des Extrudates (1), und wobei eine grösste Höhe (4) des Extrudates (1) höchstens 20% grösser ist als eine kleinste Höhe (4) des Extrudates (1);
Ablängen des Extrudates (1); und
Abtragen von Bestandteilen des Trägers (11) und/oder des expandierbaren Materials (13) von den abgelängten Extrudaten (2) zu Bildung einzelner Dämmelemente (16).

2. Verfahren nach Anspruch 1, wobei das Extrudat (1) beim Ablängen im Wesentlichen senkrecht zur Extrusionsrichtung (15) geschnitten wird.

3. Verfahren nach einem der vorhergehenden Ansprüche, wobei der Träger (11) mit einer ersten Wand (5) und einer zweiten Wand (6) extrudiert wird, welche im Wesentlichen parallel zueinander verlaufen und durch zumindest eine Rippe (7) miteinander verbunden sind.

4. Verfahren nach Anspruch 3, wobei das expandierbare Material (13) zwischen den beiden Wänden (5, 6) extrudiert wird.

5. Verfahren nach Anspruch 3, wobei das expandierbare Material (13) auf Aussenseiten der Wände (5, 6) extrudiert wird, wobei ein Bereich zwischen den Wänden (5, 6) frei bleibt von expandierbarem Material (13).

6. Verfahren nach Anspruch 5, wobei der Träger (11) zudem mit Schutzwänden (8), welche auf der Aussenseite der beiden Wände (5, 6) und neben dem expandierbaren Material (13) angeordnet sind, extrudiert wird.

7. Verfahren nach einem der Ansprüche 5 oder 6, wobei das expandierbare Material (13) eine Expansionsrate von 300 bis 1200% hat.

8. Verfahren nach einem der Ansprüche 5 bis 7, wobei zwischen den Wänden (5, 6) mehrere Rippen (7) extrudiert werden zur Bildung eines mechanisch belastbaren Trägers (11).

9. Verfahren nach einem der Ansprüche 1 oder 2, wobei der Träger (11) als Platte (9) extrudiert wird, und wobei das expandierbare Material (13) ein- oder beidseitig der Platte (9) extrudiert wird.

10. Verfahren nach einem der vorhergehenden Ansprüche, wobei einstückig mit dem Träger (11) zumindest ein Clip (17) extrudiert wird, welcher über die rechteckige Grundform des Querschnittes des Extrudates (1) hinausragt.

11. Verfahren nach Anspruch 10, wobei beim Abtragen eine Tiefe (18) des Clips (17) in Extrusionsrichtung (15) so stark verkleinert wird, dass dadurch ein oder mehrere Clips (17) mit einer Tiefe (18) von weniger als 1 cm geformt werden.

12. Verfahren nach einem der Ansprüche 1 bis 9, wobei das Verfahren die zusätzlichen Schritte umfasst:
Formen zumindest einer Öffnung (19) im extrudierten Träger (11); und
Einbringung eines vorgefertigten Clips in die Öffnung (19).

13. Verfahren nach Anspruch 12, wobei der vorgefertigte Clip aus einem anderen Material gebildet ist als der extrudierte Träger (11).

14. Verfahren nach einem der vorhergehenden Ansprüche, wobei beim Abtragen ein rechteckiger Grundriss der abgelängten Extrudate (2), welcher in einer Ebene der Extrusionsrichtung (15) und der Breite (3) des Extrudates liegt, in eine nicht rechteckige Form geändert wird.

15. Verfahren nach einem der vorhergehenden Ansprüche, wobei beim Abtragen eine Breite (3) des Querschnittes des Extrudates (1) verkleinert wird.
